# EUROPEAN PATENT APPLICATION

(11) **EP 2 398 231 A1**
(43) Date of publication of application: **21.12.2011**
(21) Application number: 11155981.1
(22) Date of filing: 25.02.2011
(51) Int. Cl.: H04N 5/445, H04N 5/76, H04N 7/173, G11B 31/00

(54) **Broadcast recording apparatus and broadcast recording method**

(30) Priority: 15.06.2010 JP 2010136086
(71) Applicant: Kabushiki Kaisha Toshiba, Tokyo (JP)
(72) Inventor: Shimomura, Kazuyoshi, Tokyo (JP)
(74) Representative: HOFFMANN EITLE

(57) **Abstract**

According to embodiments, there is provided a broadcast recording apparatus including: a recording module configured to record a broadcast program; a recorded information managing module configured to manage content-related information of the broadcast program having been recorded by the recording module; a playback module configured to play back the broadcast program having been recorded; and an extending module configured to extend a recording time slot in the content-related information of the broadcast program having been recorded and having been played back by the playback module, in accordance with an extension of a broadcast time slot of the broadcast program.

## Description

### CROSS-REFERENCE TO RELATED APPLICATION(S)

This application is based upon and claims the benefit of priority from Japanese Patent Application No. 2010-136086, filed on June 15, 2010, the entire contents of which are incorporated herein by reference.

### FIELD

Embodiments described herein relate generally to a broadcast recording apparatus and a broadcast recording method for recording plural programs.

### BACKGROUND

There are broadcast recording apparatuses capable of recording programs on plural channels. Such broadcast recording apparatus has a function of performing multi-channel recording repeatedly in a period between a start time and an end time, set by the user in advance. This function allows the user to view a program from the head, even if the user failed to view the program from a broadcast start time and stared viewing after the broadcast start time.

For example, JP-2008-104203-A discloses a broadcast program recording/reproducing apparatus capable of automatically changing the recording time slot in accordance with a change in the schedule broadcast time slot of a program whose recording has been reserved/registered so that recording is performed to the end of the program.

On the other hand, for example, when the multi-channel recording is performed repeatedly in a period from a start time to an end time set by the user in advance, if a broadcast time slot of a program has been changed unexpectedly to be extended beyond the original end time, the program may not be recorded to the end. Although there is a desire to record a program on a certain channel to the end by extending the recording period in a multi-channel period-specified recording, currently no means to satisfy that desire is available.

### SUMMARY

One object of the present invention is to provide a broadcast recording apparatus and a broadcast recording method which can record a program following broadcast extension of the program in a multi-channel period-specified recording.

According to embodiments, there is provided a broadcast recording apparatus including: a recording module configured to record a broadcast program; a recorded information managing module configured to manage content-related information of the broadcast program having been recorded by the recording module; a playback module configured to play back the broadcast program having been recorded; and an extending module configured to extend a recording time slot in the content-related information of the broadcast program having been recorded and having been played back by the playback module, in accordance with an extension of a broadcast time slot of the broadcast program.

There is also provided a broadcast recording apparatus including: a recording module configured to record a broadcast program; a recorded information managing module configured to manage information of content of the broadcast program having been recorded by the recording module; a playback module configured to play back the broadcast program having been recorded; and an extending module configured to extend a next recording time slot in the information of content of the broadcast program having been recorded and having been played back by the playback module, in accordance with an extension of a broadcast time slot of the broadcast program.

There is also provided a broadcast recording method including: recording a broadcast program; managing information of content of the broadcast program having been recorded; playing back the broadcast program having been recorded in accordance with an external instruction; and extending a recording time slot in the information of content of the broadcast program having been recorded and having been played back, in accordance with an extension of a broadcast time slot of the broadcast program.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 is a block diagram showing the configuration of a receiving apparatus according to a first embodiment.

Fig. 2 shows an example recording setting picture used in the receiving apparatus according to the first embodiment.

Fig. 3 shows an example picture where one of recorded programs is selected in the receiving apparatus according to the first embodiment.

Fig. 4 is a flowchart of an automatic recording extension process which is executed by the receiving apparatus according to the first embodiment.

Fig. 5 is a flowchart of a recording extension process with a user selection which is executed by the receiving apparatus according to the first embodiment.

Fig. 6 shows an example picture where one of recorded programs is selected in a receiving apparatus according to a second embodiment.

### DETAILED DESCRIPTION

In general, according to one embodiment, there is provided a broadcast recording apparatus including: a recording module configured to record a broadcast program; a recorded information managing module configured to manage content-related information of the broadcast program having been recorded by the recording module; a playback module configured to play back the broadcast program having been recorded; and an extending module configured to extend a recording time slot in the content-related information of the broadcast program having been recorded and having been played back by the playback module, in accordance with an extension of a broadcast time slot of the broadcast program.

Embodiments will be described below.

(First embodiment)

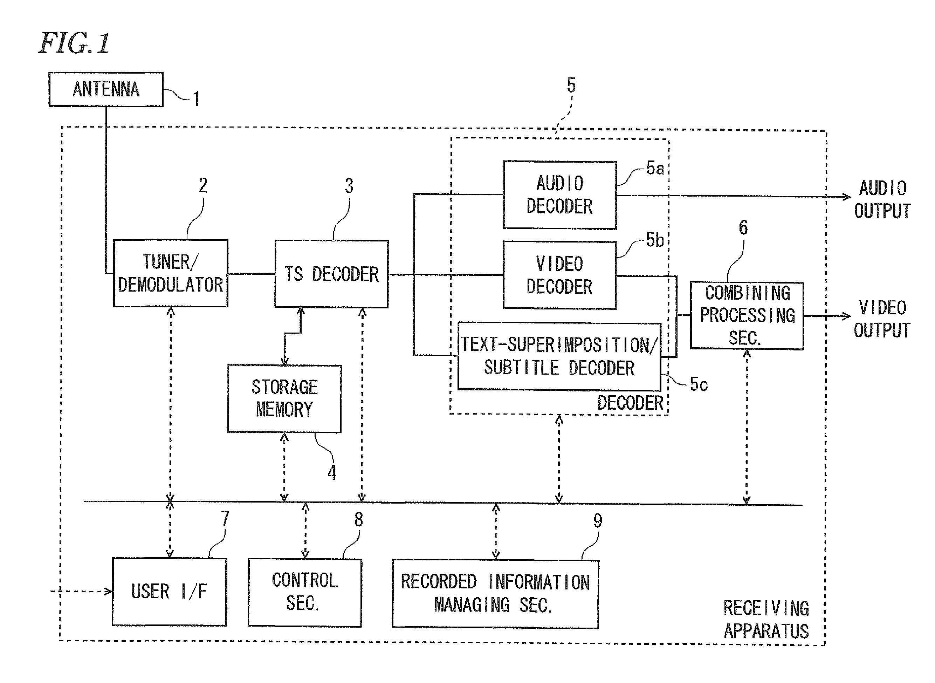

A first embodiment will be hereinafter described with reference to Figs. 1-5.

Broadcast recording apparatus are generally provided with a function of performing multi-channel recording repeatedly in a period between a start time and an end time previously set by the user. This function allows the user to view a program from the head even if the user started viewing the program after a start of its broadcast. On the other hand, since a recording period is determined from a start time and an end time, a program whose broadcast time slot, for example, has been changed unexpectedly may not be recorded to the end if it is broadcast beyond the original end time.

The embodiment is directed to a digital broadcast receiving apparatus having the above-mentioned period-specified, repeated recording function.

Fig. 1 shows an example configuration of a receiving apparatus according to the embodiment, which is composed of an external antenna 1, a tuner/demodulator 2, a TS decoder 3, a storage memory 4, a decoder 5, a combining processing section 6, a user interface (I/F) 7, a control section 8, a recorded information managing section 9, etc.

The antenna 1 receives radio waves transmitted from broadcasting stations. The tuner/demodulator 2 decodes radio waves received by the antenna 1 into MPEG transport streams (TSs).

The TS decoder 3 decomposes each of the multiplexed streams into video data, audio data, subtitle data, etc. Recording is performed in such a manner that the data are stored in the storage memory 4 from the TS decoder 3. The storage memory 4 is an HDD, for example.

The decoder 5 decodes data that are supplied from the TS decoder 3. Audio data, video data, and text-superimposition/subtitle data are decoded by an audio decoder 5a, a video decoder 5b, and a text-superimposition/subtitle decoder 5c, respectively.

The combining processing section 6 combines together output decoded data of the video decoder 5b and the text-superimposition/subtitle decoder 5c and thereby generates a video output, which is supplied to an external display unit (not shown), for example.

The user I/F 7 receives a user manipulation instruction from, for example, a remote controller (not shown).

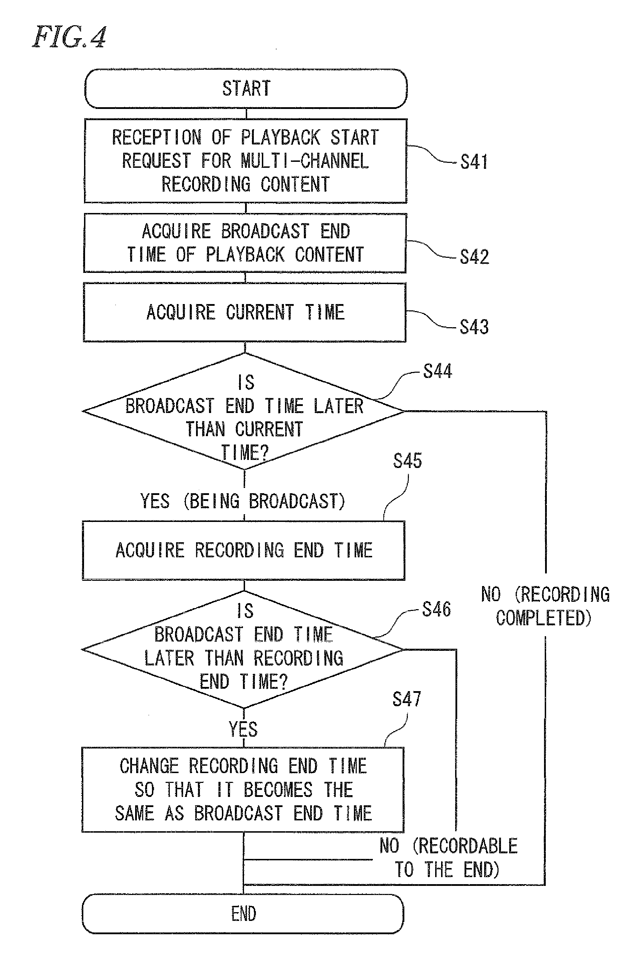

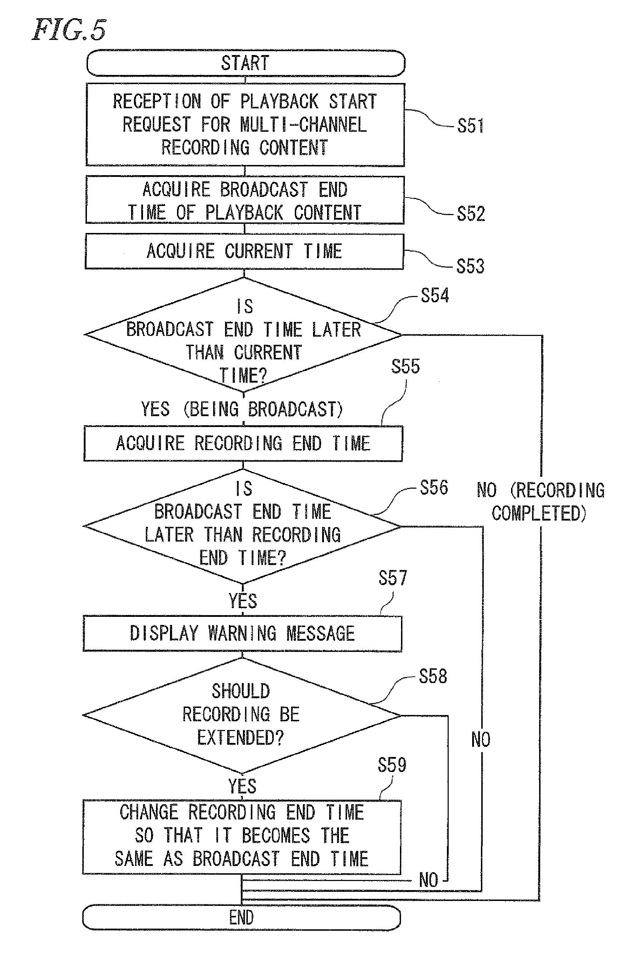

The control section 8 controls modules provided in the receiving apparatus. The control section 8 supervises processing in each section of the receiving apparatus to execute a recording extension process (described later with reference to Figs. 4 and 5).

The recorded information managing section 9 manages recorded content-related information. The content-related information includes a program name, a broadcast date and time, a recording time slot, etc. of a content.

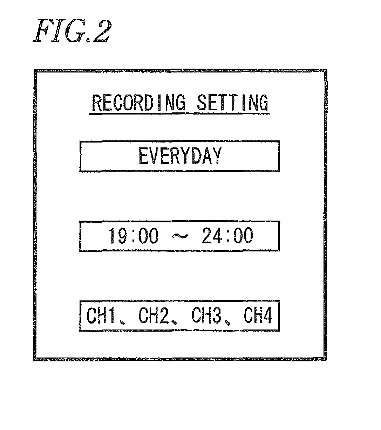

Fig. 2 shows an example recording setting picture used in the receiving apparatus according to the embodiment.

This example picture indicates that programs on channels 1, 2, 3, and 4 should be recorded from 19:00 to 24:00 everyday. Information for generating this recording setting picture is generated by the control section 8 and stored in the recorded information managing section 9.

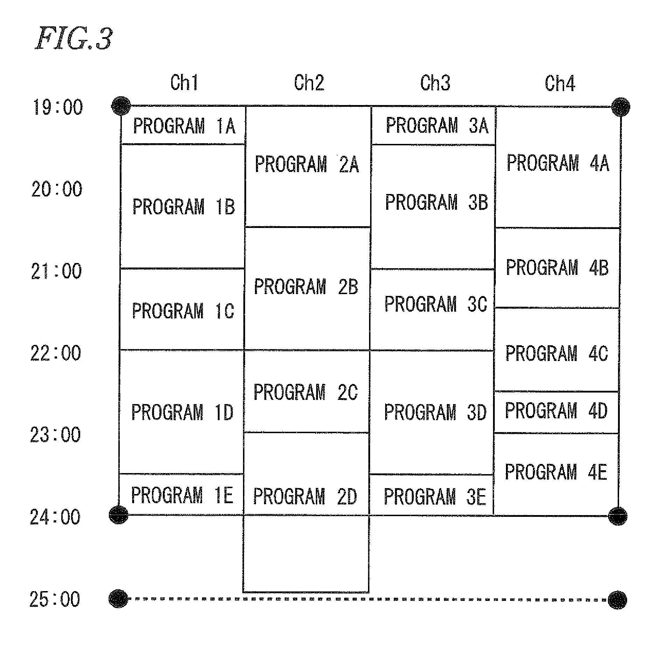

Fig. 3 shows an example picture where one of recorded contents is selected in the receiving apparatus according to the embodiment. This example picture indicates that programs 1A-1E of channel 1 (ch1), programs 2A-2D of ch2, programs 3A-3E of ch3, and programs 4A-4E of ch4 are recorded.

The user can select one of the recorded programs (contents) and have it played back. The user can also have a recording-ongoing (i.e., recording-unfinished) program played back from the head, for example (time-shift playback). If the user sequentially selects plural programs by zapping or the like, every selection operation may be treated as a "playback request" in a recording extension process (described later).

In the example of Fig. 3, the broadcast of the program 2D is usually finished at 24:00 and is finished at 25:00 (1:00 of the next day) on a certain day. If a recorded program 2D is viewed even partially by 24:00, the program 2D will be recorded until 25:00.

Fig. 4 is a flowchart of an automatic recording extension process which is executed by the receiving apparatus according to the embodiment.

In response to a playback request from the user (step S41), at step S42 the control section 8 acquires a broadcast end time of a playback content (program) from the recorded information managing section 9. At step S43, the control section 8 acquires a current time which is managed by itself.

At step S44, the control section 8 compares the broadcast end time with the current time. If the broadcast end time is later than the current time, the control section 8 judges that the content is being broadcast and moves to step S45. If the broadcast end time is not later than the current time, the control section 8 judges that the broadcast has already been finished and the recording of the content has been completed and finishes the process.

If the playback request is directed to a content that is being broadcast (recorded), at step S45 the control section 8 acquires, from the recorded information managing section 9, a recording end time that was set by the user.

At step S46, the control section 8 compares the recording end time with the broadcast end time and judges whether the content can be recorded until the broadcast end time.

If the broadcast end time is later than the recording end time and hence the content cannot be recorded until the broadcast end time (S46: yes), at step S47 the control section 8 changes the recording end time temporarily so that it becomes the same as the broadcast end time, to enable its recording until the broadcast end time. If the broadcast end time is changed again for a certain reason during the viewing, the recorded information managing section 9 re-sets the recording end time automatically so that it becomes the same as a new broadcast end time.

On the other hand, if the broadcast end time is not later than the recording end time (S46: no), the control section 8 judges that the content can be recorded to the end and finishes the process.

Fig. 5 is a flowchart of a recording extension process with a user selection which is executed by the receiving apparatus according to the embodiment.

In response to a playback request from the user (step S51), at step S52 the control section 8 acquires a broadcast end time of a playback content (program) from the recorded information managing section 9. At step S53, the control section 8 acquires a current time which is managed by itself.

At step S54, the control section 8 compares the broadcast end time with the current time. If the broadcast end time is later than the current time, the control section 8 judges that the content is being broadcast and moves to step S55. If the broadcast end time is not later than the current time, the control section 8 judges that the broadcast has already been finished and the recording of the content has been completed, and finishes the process.

If the playback request is directed to a content that is being broadcast (recorded), at step S55 the control section 8 acquires, from the recorded information managing section 9, a recording end time that was set by the user.

At step S56, the control section 8 compares the recording end time with the broadcast end time and judges whether the content can be recorded until the broadcast end time.

If the broadcast end time is later than the set recording end time and hence the content cannot be recorded until the broadcast end time (S56: yes), at step S57 the control section 8 presents the user with a warning message to the effect that the content cannot be recorded to the end of its broadcast (e.g., displays it on the screen) to cause the user to decide whether to record it until the end of its broadcast. If the user decides to record the content until the broadcast end time (e.g., if the user expresses such an intention by operating a button or the like of the remote controller) (S58: yes), at step S59 the control section 8 changes the recording end time so that it becomes the same as the broadcast end time, to enable its recording until the broadcast end time. If the broadcast end time is changed again for a certain reason during the viewing, the recorded information managing section 9 re-sets the recording end time automatically so that it becomes the same as a new broadcast end time. If the user does not express an intention of extending the recording (S58: no), the control section 8 finishes the process.

On the other hand, if the broadcast end time is not later than the recording end time (S56: no), the control section 8 judges that the content can be recorded to the end and finishes the process.

With each of the above-described processes in which a recording end time is temporarily changed so as to be the same as a broadcast end time, a program of repetitive, period-specified recording can be viewed (recorded) until its end even if its broadcast end time is extended for a certain reason.

(Second embodiment)

A second embodiment will be described below with reference to Figs. 1, 2, and 6. Items having the same ones in the first embodiment will not be described in detail.

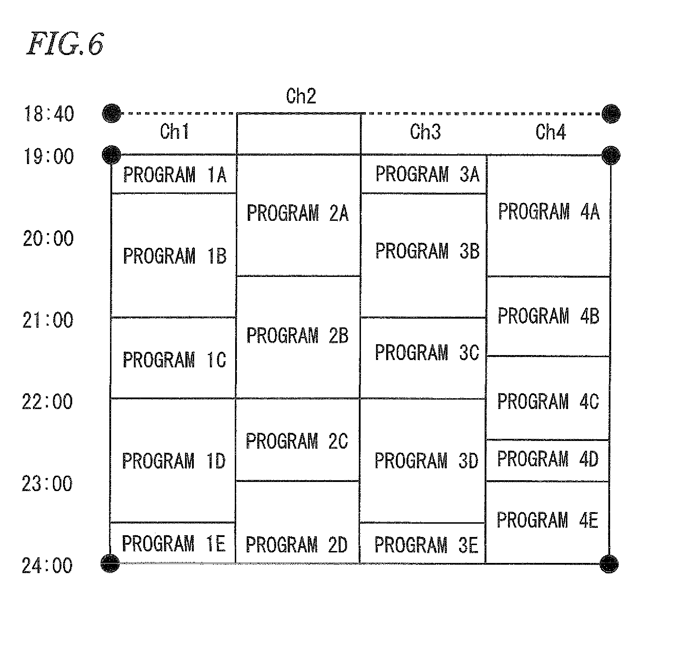

Fig. 6 shows an example picture where one of recorded contents is selected in the receiving apparatus according to the embodiment. This example picture indicates that programs 1A-1E of channel 1 (ch1), programs 2A-2D of ch2, programs 3A-3E of ch3, and programs 4A-4E of ch4 are recorded.

The user can select one of the recorded programs (contents) and have it played back. The user can also have a recording-ongoing (i.e., recording-unfinished) program played back from the head, for example (time-shift playback).

Whereas the first embodiment relates to the recording end time, this embodiment relates to the recording start time. Fig. 6 shows that the broadcast of the program 2A is usually started at 19:00 and is started at 18:40 on a certain day. If a recorded program 2A is viewed even partially, the program 2A will be recorded from the start, for example, on the next day or in the next week even if it starts from 18:40.

The following methods for solution, advantages, and important points have been described in the above embodiments.

<Methods for solution>

(1) In starting a time-shift playback, a broadcast end time of a playback content is acquired from information (a broadcast type, a network ID, a transport stream ID, a service ID, etc.) of the playback content.

(2) Whether or not the playback content (program) will be reproduced to the end is judged on the basis of the broadcast end time, a current time, and a recording end time.

(3) If it is judged that the content will not be recorded to the end, the recording is extended by either of the following methods:

(3a) The recording end time is extended automatically so that the content will be recorded to the end.

(3b) A warning message to the effect that the playback content will not be recorded to the end is presented to the user when the playback is started, and the user is requested to judge whether to extend the recording. If the user requests to extend the recording, the recording end time is extended to the broadcast end time of the content.

Alternatively, the user may be requested to judge whether to extend the recording by presenting the user with a warning message to the effect that the playback content will not be recorded to the end a prescribed time before the recording end time. Also in this case, the recording end time is extended to the broadcast end time of the content if the user requests to extend the recording.

<Advantages and important points>

The user is allowed to record and have it played back to the end a content (program) he or she is viewing.

A playback content can be recorded to the end by judging whether or not it will be reproduced to the end on the basis of information of the playback content, a current time, and a recording end time. Because of the nature of the multi-channel repetitive recording, recording every content to its broadcast end time affects the recordable time (storage capacity). In contrast, in the embodiments, the influence on the recordable time (storage capacity) is small because only programs for which the user expresses an intention of viewing are subjected to extended recording.

The invention is not limited to the above embodiments and various modifications are possible without departing from the spirit and scope of the invention. Example modifications are as follows:

(a) Recording of every program whose broadcast starts before a recording start time is automatically started earlier irrespective of the channel and whether it is played back or not.

(b) Recording of every program that will be broadcast beyond a recording end time is extended automatically irrespective of the channel and whether it is played back or not.

(c) A mechanism for allowing the user to make a setting as to whether to start recording earlier than a recording start time or beyond a recording end time (e.g., a menu is displayed on the display unit and a setting is made by operating a button of the remote controller).

(d) A mechanism for allowing the user to set an extra recording time for a recording start time or a recording end time.

(e) A subject for which an intention of extending the recording is not limited to a program having been recorded and may be a program being broadcast. That is, viewing a program being broadcast may be a module configured to externally input an intention of extending the recording; the recording time of the program is extended if it is a recording subject program.

Various inventions can be conceived by properly combining plural constituent elements disclosed in each embodiment. For example, several ones of the constituent elements may be omitted, and constituent elements of different embodiments may be combined as appropriate.

## Claims

1. A broadcast recording apparatus comprising:
a recording module configured to record a broadcast program;
a recorded information managing module configured to manage content-related information of the broadcast program having been recorded by the recording module;
a playback module configured to play back the broadcast program having been recorded; and
an extending module configured to extend a recording time slot in the content-related information of the broadcast program having been recorded and having been played back by the playback module, in accordance with an extension of a broadcast time slot of the broadcast program.

2. The apparatus of Claim 1, further comprising:
a display signal output module configured to output, to a display module, a signal of a display for confirming an intention of the user to extend the recording time slot; and
an input module configured to externally input the user's intention to extend, in response to the display,
wherein the extending module extends the recording time slot of the broadcast program if the user's intention to extend is input through the input module.

3. A broadcast recording apparatus comprising:
a recording module configured to record a broadcast program;
a recorded information managing module configured to manage information of content of the broadcast program having been recorded by the recording module;
a playback module configured to play back the broadcast program having been recorded; and
an extending module configured to extend a next recording time slot in the information of content of the broadcast program having been recorded and having been played back by the playback module, in accordance with an extension of a broadcast time slot of the broadcast program.

4. The apparatus of Claim 3,
wherein the extension of the broadcast time slot of the broadcast program is an advance extension of a start time

5. The apparatus of Claim 2, further comprising:
the display module.

6. A broadcast recording method comprising:
recording a broadcast program;
managing information of content of the broadcast program having been recorded;
playing back the broadcast program having been recorded in accordance with an external instruction; and
extending a recording time slot in the information of content of the broadcast program having been recorded and having been played back, in accordance with an extension of a broadcast time slot of the broadcast program.
